(19) **Europäisches Patentamt / European Patent Office / Office européen des brevets**

(11) **EP 3 576 272 A1**

(12) **EUROPEAN PATENT APPLICATION**
published in accordance with Art. 153(4) EPC

(43) Date of publication:
04.12.2019 Bulletin 2019/49

(51) Int Cl.:
*H02M 1/34* [(2007.01)]      *H02M 3/158* [(2006.01)]
*H02M 1/14* [(2006.01)]

(21) Application number: 17894575.4

(22) Date of filing: 29.06.2017

(86) International application number:
**PCT/CN2017/090939**

(87) International publication number:
**WO 2018/137314 (02.08.2018 Gazette 2018/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 24.01.2017 CN 201710060307

(71) Applicant: **ZTE Corporation**
**Shenzhen 518057 (CN)**

(72) Inventor: **JIANG, Fabiao**
**Shenzhen**
**Guangdong 518057 (CN)**

(74) Representative: **Petraz, Gilberto Luigi et al**
**GLP S.r.l.**
**Viale Europa Unita, 171**
**33100 Udine (IT)**

(54) **FILTERING METHOD AND DEVICE FOR DC-DC CONVERTER, TERMINAL AND STORAGE MEDIUM**

(57)     Disclosed are a filtering method and device for a DC-DC converter, a terminal and a storage medium. One end of the filtering device is connected to a switching node of a DC-DC converter, and the other end of the filtering device is connected to ground. The filtering device is used for eliminating a peak voltage generated on the switching node of the DC-DC converter.

**Fig. 1**

**Description**

**Field of the Invention**

The present disclosure relates to the field of DC-DC converter, and in particular, to a filtering method for a DC-DC converter, a device for the DC-DC converter, and a terminal and a storage medium.

**Background of the Invention**

A switching power supply (also called a DC-DC converter), because of its performance such as high efficiency, reliable operation, low voltage for high current (such as through a buck converting circuit), high voltage (through a switching DC boost circuit), is used more and more widely in smartphones in, such as a core voltage of CPU, a battery charging circuit, a backlight circuit, a flash driver circuit. However, since an operation frequency of the switching power supply is high, a very high rate of change in current (di/dt) and a very high rate of change in voltage (dv/dt) are generated within a circuit, which causes the switching power supply to generate relatively strong electromagnetic interference onto a radio-frequency circuit via coupling approaches such as conduction, radiation and crosstalk.

At present, in order to eliminate interference of space radiation, the circuit of the DC-DC converter is generally arranged within a shield. In order to eliminate conduction interference generated by input and output voltages and a reference ground plane, manners generally used to solve the problem are: adding various high-frequency filter circuits at the input and output terminals, for example, connecting a pF-level filter capacitor in parallel; or adjusting and improving a layout, for example, arranging the circuit of the DC-DC converter within the shield, and arranging inductors to be as close as possible to a chip; or adjusting a switching frequency of the DC-DC converter via a software.

However, generation of a peak voltage on a switching node (a SW pin or a LW pin of a power supply chip) of the DC-DC converter is a main interference source of the circuit of the DC-DC converter, and these filtering measures adopted currently for eliminating interference are filtering means that target at an object interfered or an interference path and cannot completely eliminate the interference of the DC-DC converter.

**Summary of the Invention**

For this purpose, embodiments of the present disclosure aims to provide a filtering method and a device for a DC-DC converter, and a terminal and a storage medium, which can completely eliminate interference of the DC-DC converter so as to improve an anti-interference capability of the DC-DC converter and further improve user experience.

In order to achieve the above objective, the technical solutions of the present disclosure are implemented as following.

According to a first aspect, a filtering device for a DC-DC converter is provided in embodiments of the present disclosure. One end of the filtering device is connected to a switching node of the DC-DC converter, and the other end of the filtering device is connected to ground; and the filtering device is configured to eliminate a peak voltage generated on the switching node of the DC-DC converter.

Alternatively, the filtering device includes: an RC filtering circuit, wherein one end of a resistor *Rs* of the RC filtering circuit is connected to the switching node of the DC-DC converter, and the other end of the resistor *Rs* of the RC filtering circuit is connected to one end of a capacitor *Cs* of the RC filtering circuit, the other end of the capacitor *Cs* of the RC filtering circuit being connected to ground.

Alternatively, the resistor $R_S$ of the RC filter circuit is positively correlated with a ratio of parasitic inductance of the DC-DC converter to parasitic capacitance of a low voltage side switch FET of the DC-DC converter. The capacitor $C_S$ of the RC filter circuit is directly proportional to the resistor $R_S$ of the RC filter circuit. A direct proportion coefficient is inversely proportional to a resonant frequency generated by the parasitic capacitance of the DC-DC converter and the parasitic inductance of the DC-DC converter.

Alternatively, the filtering device further includes: a voltage-regulator diode, wherein a cathode of the voltage-regulator diode is connected to the switching node of the DC-DC converter, and an anode of the voltage-regulator diode is connected to ground.

Alternatively, the filtering device includes: a capacitor $C_1$, wherein one end of the capacitor $C_1$ is connected to the switching node of the DC-DC converter, and the other end of the capacitor $C_1$ is connected to ground.

According to a second aspect, a terminal is provided in an embodiment of the present disclosure. The terminal includes the device as defined in the above one or more embodiments.

According to a third aspect, a method for a DC-DC converter is provided in an embodiment of the present disclosure, and the method is applied in a filtering device. One end of the filtering device is connected to a switching node of the DC-DC converter, and the other end of the filtering device is connected to ground. The method includes: eliminating a peak voltage generated on the switching node of the DC-DC converter, by the filtering device.

Alternatively, the filtering device includes: an RC filtering circuit, wherein one end of a resistor *Rs* of the RC filtering circuit is connected to the switching node of the DC-DC converter, and the other end of the resistor *Rs* of the RC filtering circuit is connected to one end of a capacitor *Cs* of the RC filtering circuit, the other end of the capacitor *Cs* of the RC filtering circuit being connected to ground.

Alternatively, the filtering device includes: a capacitor $C_1$, wherein one end of the capacitor $C_1$ is connected to the switching node of the DC-DC converter, and the other end of the capacitor $C_1$ is connected to ground.

A filtering method for a DC-DC converter, a device for the DC-DC converter, and a terminal are provided in embodiments of the present disclosure. One end of the filtering device is connected to a switching node of the DC-DC converter, and the other end of the filtering device is connected to ground. The filtering device is configured to eliminate a peak voltage generated on the switching node of the DC-DC converter. Since the peak voltage generated on the switching node of the DC-DC converter is a main interference source of a circuit of the DC-DC converter, interference of the DC-DC converter can be fundamentally eliminated if the filtering device eliminates the peak voltage generated on the switching node of the DC-DC converter. In this way, the interference of the DC-DC converter can be completely eliminated, improving an anti-interference capability of the DC-DC converter and further improving user experience.

**Brief Description of the Drawings**

Fig. 1 schematically shows a structure of a filtering device for a DC-DC converter according to an embodiment of the present disclosure;

Fig. 2 schematically shows an alternative structure of the DC-DC converter according to an embodiment of the present disclosure;

Fig. 3 schematically shows a structure of an RC filter circuit of the DC-DC converter according to an embodiment of the present disclosure;

Fig. 4 schematically shows an alternative structure of the RC filter circuit of the DC-DC converter according to an embodiment of the present disclosure;

Fig. 5 schematically shows a structure of an alternative equivalent circuit of the RC filter circuit of the DC-DC converter according to an embodiment of the present disclosure;

Fig. 6 schematically shows another alternative structure of the filtering device for the DC-DC converter according to an embodiment of the present disclosure;

Fig. 7 schematically shows still another alternative structure of the filtering device for the DC-DC converter according to an embodiment of the present disclosure;

Fig. 8 schematically shows a structure of a terminal according to an embodiment of the present disclosure; and

Fig. 9 schematically shows a flowchart of a filtering method for the DC-DC converter according to an embodiment of the present disclosure.

**Detailed Description of the Embodiments**

The technical solutions of the embodiments of the present disclosure will be described clearly and comprehensively in combination with the accompanying drawings.

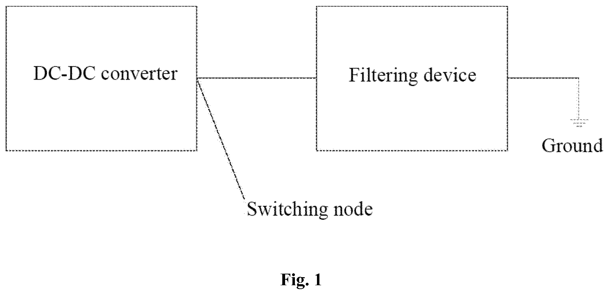

A filtering device for a DC-DC converter is provided in an embodiment of the present disclosure, and Fig. 1 schematically shows a structure of the filtering device for the DC-DC converter according to an embodiment of the present disclosure. As shown in Fig. 1, one end of the filtering device is connected to a switching node of the DC-DC converter, and the other end of the filtering device is connected to ground.

The filtering device is configured to eliminate a peak voltage generated on the switching node of the DC-DC converter.

Here, it should be noted that the peak voltage generated on the switching node of the DC-DC converter is an interference source of the DC-DC converter. Thus, interference of the DC-DC converter can be eliminated completely once the peak voltage generated on the switching node of the DC-DC converter was eliminated.

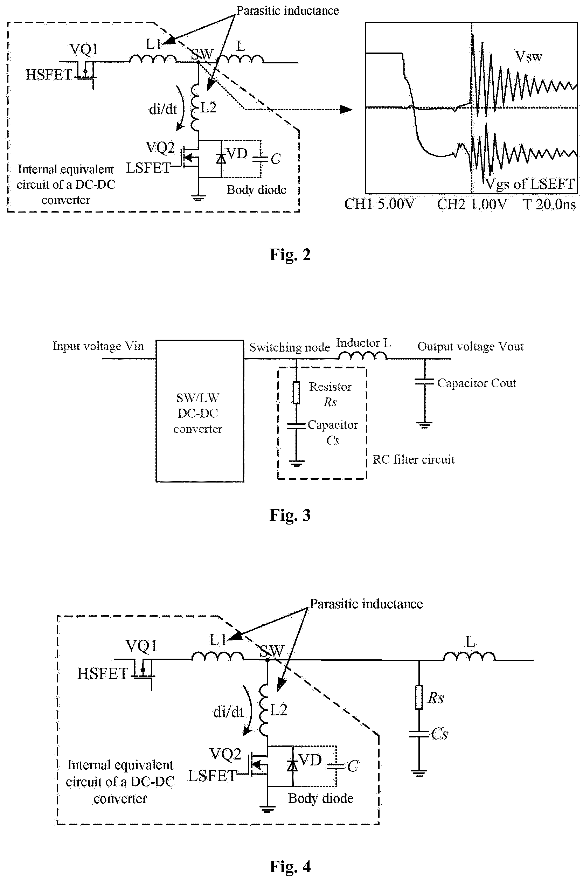

The peak voltage generated on the switching node of the DC-DC converter will be explained below by taking a buck DC-DC converter as an example in combination with Fig. 2.

Fig. 2 schematically shows an alternative structure of the DC-DC converter according to an embodiment of the present disclosure. As shown in Fig. 2, an internal equivalent circuit of the buck DC-DC converter, a waveform diagram of a voltage Vsw on the switching node of the DC-DC converter, and a waveform diagram of a gate-source voltage $V_{gs}$ of a low voltage side switch FET (LSFET) are shown.

The internal equivalent circuit of the buck DC-DC converter includes: a high voltage side switch FET (HSFET) (represented by VQ1 in Fig. 2), a low voltage side switch FET (LSFET) (represented by VQ2 in Fig. 2), an inductor L, parasitic inductance L1 and L2, a freewheeling diode VD (also called a body diode), and parasitic capacitance $C$. In the buck DC-DC converter, a reverse recovery current of the freewheeling diode VD has a very high rate of change in current (di/dt), and can generate a peak voltage via the parasitic inductance. Moreover, in addition to generation of the peak voltage by the reverse recovery current of the freewheeling diode VD, when VQ2 is turned off, rapid reduction of a current passing through the VQ2 generates a very high rate of change in current and thus generates an inductance voltage in the parasitic inductance so that an inductance voltage is superposed onto the VQ2, i.e., a peak voltage is brought onto the switching node (SW/LW).

If the peak voltage is high enough, a secondary turn-on in error or an avalanche breakdown of the low voltage side switch FET (LSFET) may be caused, and ripple noise of an output voltage of the DC-DC converter may be further increased, which also generates relatively strong radiation interference. In Fig.2, since some parasitic resistance exist, the waveform diagram of the voltage $V_{SW}$ on the switching node of the DC-DC converter and the waveform diagram of the gate-source voltage $V_{gs}$ of the low voltage side switch FET (LSFET) which are detected by an oscilloscope are both a gradual attenuated waveform diagram.

As can be seen from the foregoing, the parasitic inductance (L1 and L2) of the DC-DC converter and the parasitic capacitance ($C$) thereof as shown in Fig. 2 together constitute a resonant circuit, and a peak voltage generated by the resonant circuit is the interference source of the DC-DC converter.

In addition, the low voltage side switch FET of the DC-DC converter is a switch FET between the switching node of the DC-DC converter and ground.

In a system design, a best way to suppress the peak voltage is to reduce a parasitic inductance as much as possible, and a reasonable circuit trace may reduce the parasitic inductance. A printed circuit board (PCB) layout requires that a power trace connected with a pin of the switching node (SW/LW) must be short and thick, that as less as possible via holes are used or no via holes are used at all (because the via holes would introduce a relatively large parasitic inductance), and that an area of power included by two main power FETs (LSFET and HSFET) and an input capacitor is as small as possible.

In actual design, it is impossible to eliminate a parasitic inductance of the pin, and it is difficult to achieve an ideal PCB layout. Therefore, a solution to effectively suppress the peak voltage generated on the witching node is to add an RC filter circuit between the switching node and ground. A basic operation principle of the RC filter circuit is, by utilizing a property that a voltage of a capacitor cannot be changed sharply, to provide a shunt path to the voltage during turned-off the low voltage side switch FET (LSFET) so that a rise rate of voltage on the low voltage side switch FET (LSFET) is suppressed. A function of the RC filter circuit is to absorb overvoltage generated when the low voltage side switch FET (LSFET) is turned off, and energy generated by the parasitic inductance of the main circuit is absorbed by a filtering capacitor $Cs$ of the RC filter circuit.

In an actual implementation, in order to eliminate interference generated by the resonant circuit, the filtering device includes an RC filtering circuit.

One end of a resistor $R_S$ of the RC filtering circuit is connected to the switching node of the DC-DC converter, and the other end thereof is connected to one end of a capacitor $C_S$ of the RC filtering circuit, the other end of $C_S$ being connected to ground.

Fig. 3 schematically shows a structure of the RC filter circuit of the DC-DC converter according to an embodiment of the present disclosure. As shown in Fig. 3, the RC filtering circuit is illustrated in a dashed box. The RC filter circuit includes a resistor $R_S$ and a capacitor $C_S$. One end of $R_S$ is connected to the switching node (SW/LW) of the DC-DC converter, and the other end of $R_S$ is connected to one end of $C_S$, the other end of $C_S$ being connected to ground. One end of an inductor L is connected to the switching node, and the other end of the inductor L is connected to an output capacitor Cout, the other end of the output capacitor Cout being connected to ground.

After a peak voltage of an input voltage Vin is eliminated through the DC-DC converter and the RC filter circuit, an output voltage Vout is output through the inductor L and the capacitor Cout. The resulted output voltage is free from the peak voltage.

When the RC filter circuit is used to eliminate the peak voltage, in order to determine values of, the resistor and the capacitor of the RC filter circuit, in an alternative embodiment, the resistor $R_S$ of the RC filter circuit is positively correlated with a ratio of the parasitic inductance of the DC-DC converter to the parasitic capacitance of the low voltage side switch FET of the DC-DC converter. For example, a calculation formula of the resistor $R_S$ of the DC-DC converter is as follows:

$$R_S = \sqrt{Ls \Big/ Coss} \qquad (1)$$

wherein, $Ls$ is the parasitic inductance of the DC-DC converter, and $Coss$ is the parasitic capacitance of the low voltage side switch FET of the DC-DC converter. Here, the low voltage side switch FET of the DC-DC converter is a switch FET which is located between the switching node and ground in an internal equivalent circuit of the DC-DC converter.

The capacitor $C_S$ of the RC filter circuit is directly proportional to the resistor $R_S$ of the RC filter circuit, and a direct proportion coefficient is inversely proportional to a resonant frequency generated by a parasitic capacitance of the DC-DC converter and a parasitic inductance of the DC-DC converter. For example, a calculation formula of the capacitor $C_S$ of the RC filter circuit is as follows:

$$C_S = \frac{N}{f_{ring}} * R_S \qquad (2)$$

wherein, $f_{ring}$ is the resonant frequency generated by the parasitic capacitance of the DC-DC converter and the parasitic inductance of the DC-DC converter; and N is an integer bigger than 2, for example, N may be 3.

Specifically, Fig. 4 schematically shows an alternative structure of the RC filter circuit of the DC-DC converter according to an embodiment of the present disclosure. As shown in Fig. 4, a resistor of the RC filter circuit is represented by $Rs$, and a capacitor of the RC filter circuit is represented by $Cs$. In Fig. 4, prior to incorporation of the RC filter circuit, a series resonance is formed within the DC-DC converter by parasitic capacitance $C$ of the low voltage side switch FET LSFET and parasitic inductance $Ls$ (L1 and L2), wherein a resonant frequency of the series resonance is calculated by a following formula:

$$f_0 = \frac{1}{2\pi\sqrt{LsC}} \qquad (3)$$

wherein, the resonant frequency $f_0$ may be measured by an oscilloscope. In the case that a parasitic capacitance $C$ of a low voltage side switch FET LSFET is provided by a power supply chip manufacturer, a value of a parasitic inductance $Ls$ may be calculated.

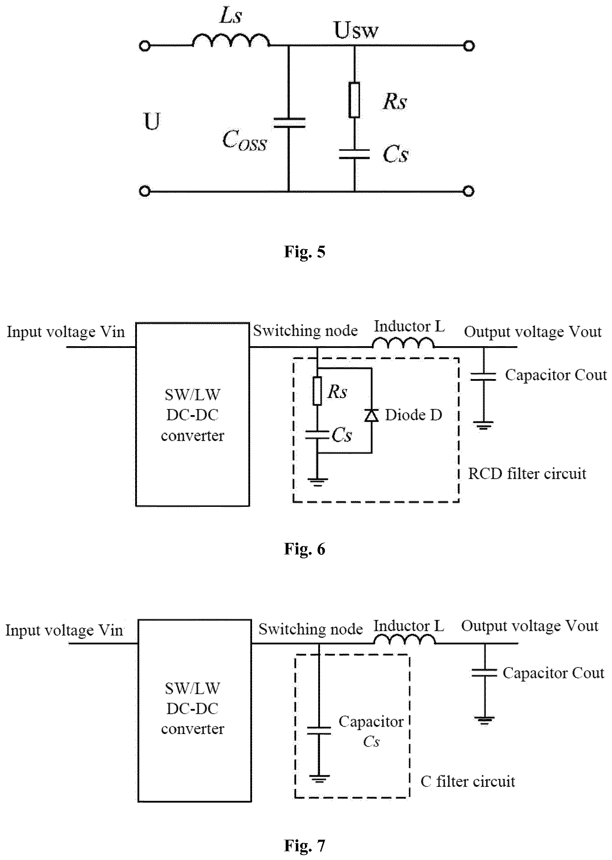

After the value of the parasitic inductance $Ls$ is determined, a value of the resistor $Rs$ of the RC filter circuit and a value of the capacitor $Cs$ of the RC filter circuit need to be determined. Fig. 5 schematically shows a structure of an alternative equivalent circuit of the RC filter circuit of the DC-DC converter according to an embodiment of the present disclosure. As shown in Fig. 5, the DC-DC converter is equivalent to an LC oscillating circuit. Inductance of the LC oscillating circuit is represented by $Ls$; capacitance of the LC oscillating circuit is represented by $Coss$; and a characteristic impedance $Rt$ is that:

$$Rt = \sqrt{Ls \Big/ Coss} \qquad (4)$$

According to a design principle of a filter, when a square signal is input, overshoot waveform or undershoot waveform may occur for a voltage Usw on the switching node of the DC-DC converter if a load impedance was not equal to the characteristic impedance. This characteristic is similar to the principle of impedance matching of a transmission line. In this sense, a function of the RC filter circuit added is the same as a of alternating-current impedance matching at a load end of the transmission line. Accordingly, the resistor $Rs$ of the RC filter circuit can be obtained by the above formula (4).

Then, the capacitor $Cs$ of the RC filter circuit is determined based on a principle that a time constant of $RsCs$ is more than twice of the resonant frequency. When N=3, calculation formulas are as follows:

$$RsCs = 3 \Big/ f_{ring} \qquad (5)$$

$$Cs = \frac{3}{f_{ring}} * Rs \qquad (6)$$

wherein, $f_{ring}$ is the resonant frequency $f_0$, and may be measured by the oscilloscope.

In this way, the resistor $Rs$ of the RC filter circuit and the capacitor $Cs$ of the RC filter circuit are determined.

In order to strengthen high voltage resistance of the low voltage side switch FET, in an alternative embodiment, the filtering device further includes a voltage-regulator diode.

A cathode of the voltage-regulator diode is connected to the switching node of the DC-DC converter, and an anode of the voltage-regulator diode is connected to ground.

Specifically, Fig. 6 schematically shows another alternative structure of the filtering device for the DC-DC converter according to an embodiment of the present disclosure. An RCD filtering circuit is illustrated in the dashed box. The RCD filtering circuit includes a resistor $Rs$, a capacitor $Cs$ and a voltage-regulator diode D. One end of $Rs$ is connected to the switching node (SW/LW) of the DC-DC converter, and the other end of $Rs$ is connected to one end of $Cs$, the other end of $Cs$ being connected to ground. One end of the voltage-regulator diode D is connected to the switching node of the DC-DC converter, and is also connected to one end of an inductor L. The other end of the voltage-regulator diode D is connected to ground. The other end of the inductor L is connected to one end of an output capacitor Cout, and the other end of the output capacitor Cout is connected to ground.

After a peak voltage of an input voltage Vin is eliminated through the DC-DC converter and the RCD filtering circuit, an output voltage Vout is output through L and Cout. A reason for adding the voltage-regulator diode D is for safety consideration in some high voltage applications. It is thus designed to connect a voltage-regulator diode D in parallel with the RC filtering circuit so as to protect the low voltage side switch FET LSFET from impact of a voltage peak. That is, voltage clamping is performed to the voltage peak on the switching node of the DC-DC converter, so that the resulted output voltage is free from the peak voltage.

A stabilized voltage value of the above voltage-regulator diode is 1.5 times of the input voltage of the DC-DC converter.

It is known from many experiments that the stabilized voltage value of the voltage-regulator diode should be selected as 1.5 times of the input voltage to meet a design requirement of protecting the low voltage side switch FET (LSFET).

In order to eliminate the interference source of the DC-DC converter, in an alternative embodiment, the filtering device includes a capacitor $C_1$.

One end of the capacitor $C_1$ is connected to the switching node of the DC-DC converter, and the other end of the capacitor $C_1$ is connected to ground.

For example, Fig. 7 schematically shows still another alternative structure of the filtering device for the DC-DC converter according to an embodiment of the present disclosure. As shown in Fig. 7, a C filtering circuit is illustrated in the dashed box. The C filtering circuit includes a capacitor $C_1$ which is represented by $Cs$. One end of $Cs$ is connected to the switching node (SW/LW) of the DC-DC converter, and the other end of $Cs$ is connected to ground. One end of the inductor L is connected to one end of an output capacitor Cout, and the other end of the output capacitor Cout is connected to ground.

After a peak voltage of an input voltage Vin is eliminated through the DC-DC converter and the C filtering circuit, an output voltage Vout is output through L and Cout, and the resulted output voltage is free from the peak voltage.

It should be noted that, a value of capacitance of the C filtering circuit can be determined by using the method used for the above-mentioned RC filtering circuit, and details will be not repeated here.

In addition, a reason for using the C filtering circuit here for eliminating the peak voltage of the switching node of the DC-DC converter is as below. Since there is no resistor in the C filtering circuit, when the low voltage side switch FET LSFET in Fig. 7 is in a turn-on state, electric charge (energy) accumulated on the capacitor $Cs$ is discharged directly through the low voltage side switch FET LSFET. At an instant when the low voltage side switch FET LSFET is turned on, a relatively large inrush current is generated. If this inrush current was less than a maximum rated current of the low voltage side switch FET LSFET, the C filtering circuit may meet the design requirement; else if the inrush current exceeds the rated current of the low voltage side switch FET LSFET, there is a risk that the C filtering circuit may destroy the low voltage side switch FET LSFET.

A filtering device for the DC-DC converter is provided in embodiments of the present disclosure. One end of the filtering device is connected to a switching node of the DC-DC converter, and the other end of the filtering device is connected to ground. The filtering device is configured to eliminate a peak voltage generated on the switching node of the DC-DC converter. Since the peak voltage generated on the switching node of the DC-DC converter is a main interference source of a circuit of the DC-DC converter, interference of the DC-DC converter can be fundamentally eliminated if the filtering device eliminates the peak voltage generated on the switching node of the DC-DC converter. In this way, the interference of the DC-DC converter can be completely eliminated, improving an anti-interference capability of the DC-DC converter and further improving user experience.

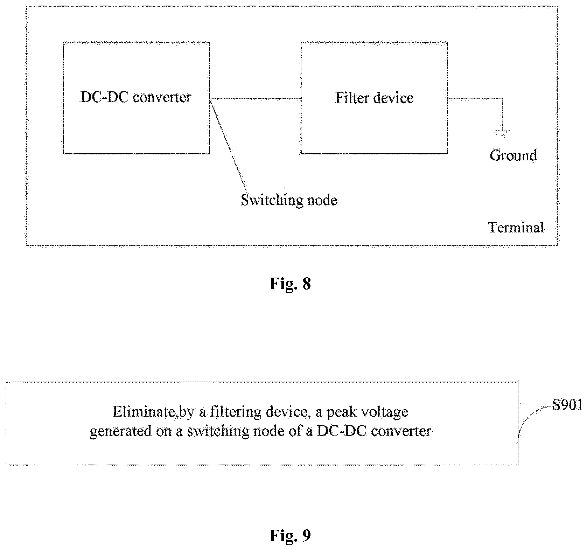

Based on a same inventive concept, a terminal is provided in an embodiment of the present disclosure. Fig. 8 schematically shows a structure of a terminal according to an embodiment of the present disclosure. As shown in Fig. 8, the terminal includes a DC-DC converter and a filtering device as defined in the above one or more embodiments. One end of the filtering device is connected to a switching node of the DC-DC converter and the other end of the filtering device is connected to ground.

Here, it should be pointed out that description of embodiments of the terminal is similar to description of the above-mentioned device, and the terminal has same beneficial effects as that in the embodiments of the device, which thus will not be repeated here. Technical details that are not disclosed in embodiments of the terminal of the present disclosure can be understood by those skilled in the art by referring to description of the embodiments of the device of the present disclosure, and will not be repeated here for conciseness.

Based on a same inventive concept, a filtering method for the DC-DC converter is provided in an embodiment of the present disclosure, and the method is applied in a filtering device, wherein one end of the filtering device is connected to a switching node of the DC-DC converter and the other end of the filtering device is connected to ground. Fig. 9 schematically shows a flowchart of the filtering method for the DC-DC converter according to an embodiment of the present disclosure. As shown in Fig. 9, the method includes:

S901: eliminating, by the filtering device, a peak voltage generated on the switching node of a DC-DC converter.

In order to eliminate interference generated on the switching node of the DC-DC converter, in an alternative embodiment, the filtering device includes an RC filtering circuit. One end of a resistor $Rs$ of the RC filtering circuit is connected to the switching node of the DC-DC converter, and the other end of the resistor $Rs$ of the RC filtering circuit is connected to one end of a capacitor $Cs$ of the RC filtering circuit, the other end of the capacitor $Cs$ of the RC filtering circuit being connected to ground.

In order to eliminate an interference source generated on the switching node of the DC-DC converter, in an alternative embodiment, the filtering device includes: a capacitor $C_1$. One end of the capacitor $C_1$ is connected to the switching node of the DC-DC converter, and the other end of the capacitor $C_1$ is connected ground.

Here, it should be pointed out that description of embodiments of the method is similar to description of the above-mentioned device, and the method has same beneficial effects as that in the embodiments of the device, which thus will not be repeated here. Technical details that are not disclosed in embodiments of the method of the present disclosure can be understood by those skilled in the art by referring to description of embodiments of the device of the present disclosure, and will not be repeated here for conciseness.

The following should be pointed out.

It should be understood that "one embodiment" or "an embodiment" mentioned throughout the description means that specific features, structures or characteristics related to embodiments are included in at least one embodiment of the present disclosure. Therefore, respective wordings of "one embodiment" or "an embodiment" mentioned throughout the description do not necessarily refer to the same embodiment. In addition, these specific features, structures or characteristics can be combined in any suitable manner in one or more embodiments. It should be understood that, in various embodiments of the present disclosure, serial numbers of the above respective processes do not mean an implementation order, and the implementation order of the respective processes should be determined by functions limitation to the implementation process of the embodiments of the present disclosure. The serial numbers of the above embodiments of the present disclosure are only used for description, and do not represent any preference for an embodiment.

It should be stated that, it is intended to cover a non-exclusive inclusion by the term "include", "including", or any other variation herein. Therefore, a process, a method, an article, or a device that includes a series of elements not only includes the series of elements but also includes other elements that are not listed explicitly or elements that are inherent to such a process, a method, an article, or a device. Without further limitations, when an element is defined by a wording of "include a ...", it does not exclude presence of a same element in the process, the method, the article, or the device that includes this element.

In several embodiments provided by the present application, it should be understood that the disclosed device and method may be implemented in other manners. The embodiments of the device described above are only schematic. For example, division of units is only partition by logic functions. In actual implementation, other manners of division may be used. For example, multiple units or components may be combined or may be integrated into another system, or some features may be omitted or may not be executed. In addition, some interfaces may be used for coupling, or direct coupling, or communication connection between components shown or discussed, and indirect coupling or communication connection between devices or units may be electrical, mechanical, or in other manners.

The units described above as separate components may be or may not be physically separated, and the components shown as units may be or may not be physical units. The components may be located in one place or may be distributed on multiple network units. Some or all of the units may be selected according to actual needs to achieve the purpose of the solution of the embodiments.

In addition, respective functional units in respective embodiments of the present disclosure may all be integrated into one processing unit; or respective units may be taken separately as one unit; or two or more units may be integrated into one unit. The above integrated units may be implemented in a manner of hardware, or may be implemented in a manner of hardware plus software functional units.

It should be understood by those ordinary skilled in the art that: all or some steps for implementing embodiments of the method described above may be completed by means of hardware associated with instructions of a program which may be stored in a computer readable storage medium, and when the program is executed, steps including the embodiments of the method described above are executed; and the aforementioned storage medium includes a medium which may store program codes, such as a removable storage device, a read only memory (ROM), a magnetic disk, or an optical disk.

Alternatively, the above-described integrated units of the present disclosure may be stored in a computer readable storage medium if it is implemented in the form of a software function module and is sold or used as a separate product. Based on such understanding, the essence of the technical solutions of the embodiments of the present disclosure or the portion of contribution to existing technologies thereof may be embodied in the form of a software product. The computer software product is stored in a storage medium, and includes several instructions which enable one computer apparatus (which may be a personal computer, a server, or a network device and so on) to perform all or part of the method described in respective embodiments of the present disclosure. The aforementioned storage medium includes various mediums that can store program codes, such as a removable storage device, an ROM, a magnetic disk, or an optical disk.

The above descriptions are only specific implementation manners of the present disclosure, but the protection scope of the present disclosure is not limited herein. Variations or substitutions that can be easily performed by one skilled in the art based on the technical scope disclosed without departing from the scope of the invention as defined in the appended claims.

**Claims**

1. A filtering device for a DC-DC converter, **characterized in that**:

   one end of the filtering device is connected to a switching node of the DC-DC converter, and the other end of the filtering device is connected to ground, and
   wherein the filtering device is configured to eliminate a peak voltage generated on the switching node of the DC-DC converter.

2. The device according to claim 1, **characterized in that** the filtering device comprises an RC filtering circuit, wherein one end of a resistor $Rs$ of the RC filtering circuit is connected to the switching node of the DC-DC converter, the other end of the resistor $Rs$ of the RC filtering circuit is connected to one end of a capacitor $Cs$ of the RC filtering circuit, the other end of the capacitor $Cs$ of the RC filtering circuit being connected to ground.

3. The device according to claim 2, **characterized in that** the resistor $R_S$ of the RC filter circuit is positively correlated with a ratio of parasitic inductance of the DC-DC converter to parasitic capacitance of a low voltage side switch FET of the DC-DC converter; and
   the capacitor $C_S$ of the RC filter circuit is directly proportional to the resistance $R_S$ of the RC filter circuit, wherein a direct proportion coefficient is inversely proportional to a resonant frequency generated by the parasitic capacitance of the DC-DC converter and the parasitic inductance of the DC-DC converter.

4. The device according to claim 2, **characterized in that** the filtering device further comprises a voltage-regulator diode, wherein a cathode of the voltage-regulator diode is connected to the switching node of the DC-DC converter, and an anode of the voltage-regulator diode is connected to ground.

5. The device according to claim 1, **characterized in that** the filtering device comprises a capacitor $C_1$, wherein one end of the capacitor $C_1$ is connected to the switching node of the DC-DC converter, and the other end of the capacitor $C_1$ is connected to ground.

6. A terminal, comprising the device according to any one of claims 1-6.

7. A method for a DC-DC converter and applied in a filtering device, **characterized in that** one end of the filtering device is connected to a switching node of the DC-DC converter, and the other end of the filtering device is connected to ground; and

the method comprises: eliminating, by the filtering device, a peak voltage generated on the switching node of the DC-DC converter.

8. The method according to claim 7, wherein the filtering device comprises an RC filtering circuit, **characterized in that** one end of a resistor *Rs* of the RC filtering circuit is connected to the switching node of the DC-DC converter, and the other end of the resistor *Rs* of the RC filtering circuit is connected to one end of a capacitor *Cs* of the RC filtering circuit, the other end of the capacitor *Cs* of the RC filtering circuit being connected to ground.

9. The method according to claim 7, **characterized in that** the filtering device comprises a capacitor $C_1$, wherein one end of the capacitor $C_1$ is connected to the switching node of the DC-DC converter, and the other end of the capacitor $C_1$ is connected to ground.

10. A computer-readable storage medium comprising a stored program which, when running, executes the method according to any one of claims 7-9.

DC-DC converter

Filtering device

Ground

Switching node

**Fig. 1**

**Fig. 2**

**Fig. 3**

**Fig. 4**

**Fig. 5**

**Fig. 6**

**Fig. 7**

DC-DC converter ———— Filter device ———— Ground

Switching node

Terminal

**Fig. 8**

Eliminate,by a filtering device, a peak voltage
generated on a switching node of a DC-DC converter — S901

**Fig. 9**

# INTERNATIONAL SEARCH REPORT

International application No.

PCT/CN2017/090939

## A. CLASSIFICATION OF SUBJECT MATTER

H02M 1/34 (2007.01) i; H02M 3/158 (2006.01) i; H02M 1/14 (2006.01) i

According to International Patent Classification (IPC) or to both national classification and IPC

## B. FIELDS SEARCHED

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS, CNTXT, DWPI, SIPOABS, CNKI: 直流, 滤波, 缓冲, 吸收, 阻尼, 电阻, 电容, 二极管, 尖峰, DC, filter, snubber, absorbing, damping, resistor, capacitor, diode, spike

## C. DOCUMENTS CONSIDERED TO BE RELEVANT

| Category* | Citation of document, with indication, where appropriate, of the relevant passages | Relevant to claim No. |
|---|---|---|
| X | CN 106100323 A (VIVO MOBILE COMMUNICATION CO., LTD.), 09 November 2016 (09.11.2016), see description, page 1, and figure 1 | 1, 2, 4-10 |
| X | CN 106230246 A (BOE TECHNOLOGY GROUP CO., LTD. et al.), 14 December 2016 (14.12.2016), description, pages 3-4, and figures 1-3 | 1, 2, 4-10 |
| A | US 2012049834 A1 (UNIV. MISSOURI), 01 March 2012 (01.03.2012), entire document | 1-10 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 August 2017 | 08 September 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LI, Xiaoyan Telephone No. (86-10) 62411798 |

Form PCT/ISA/210 (second sheet) (July 2009)

**INTERNATIONAL SEARCH REPORT**
Information on patent family members

| | International application No. |
|---|---|
| | PCT/CN2017/090939 |

| Patent Documents referred in the Report | Publication Date | Patent Family | Publication Date |
|---|---|---|---|
| CN 106100323 A | 09 November 2016 | None | |
| CN 106230246 A | 14 December 2016 | None | |
| US 2012049834 A1 | 01 March 2012 | WO 2010129850 A3 | 24 February 2011 |
| | | WO 2010129850 A2 | 11 November 2010 |

Form PCT/ISA/210 (patent family annex) (July 2009)